Europäisches Patentamt

European Patent Office

Office européen des brevets

(19)

(11)  **EP 1 319 173 B1**

(12)     **EUROPÄISCHE PATENTSCHRIFT**

(45) Veröffentlichungstag und Bekanntmachung des
Hinweises auf die Patenterteilung:
**29.06.2005   Patentblatt 2005/26**

(51) Int Cl.⁷: **G01G 19/415**, G06F 17/60

(86) Internationale Anmeldenummer:
**PCT/CH2001/000529**

(21) Anmeldenummer: **01960044.4**

(22) Anmeldetag: **03.09.2001**

(87) Internationale Veröffentlichungsnummer:
**WO 2002/025230 (28.03.2002 Gazette 2002/12)**

(54) **LOGISTIK-WAAGE**

LOGISTICS SCALES

BALANCE DE LOGISTIQUE

(84) Benannte Vertragsstaaten:
**AT BE CH CY DE DK ES FI FR GB GR IE IT LI LU
MC NL PT SE TR**

(30) Priorität: **23.09.2000   CH 185200**

(43) Veröffentlichungstag der Anmeldung:
**18.06.2003   Patentblatt 2003/25**

(73) Patentinhaber: **Digi Sens AG
3280 Murten (CH)**

(72) Erfinder:
• **LUSTENBERGER, Martin
CH-1752 Villars-sur-Glâne (CH)**

• **LUITHARDT, Wolfram
CH-1786 Sugiez (CH)**

(74) Vertreter: **Salgo, Reinhold Caspar, Dr.
Rütistrasse 103
8636 Wald (CH)**

(56) Entgegenhaltungen:
**US-A- 3 605 089          US-A- 3 863 724
US-A- 4 419 734          US-A- 4 866 255
US-A- 5 671 362**

**Beschreibung**

Die vorliegende Erfindung bezieht sich auf ein Wägesystem für die Verwaltung eines Lagers von Teilen, vorzugsweise Kleinteilen, nach dem Oberbegriff des Patentanspruches 1.

Die Verwaltung solcher Lager kann dann, wenn eine grosse Zahl unterschiedlicher Teile gelagert wird, und der Lagerumsatz gross ist, ausserordentlich aufwendig sein. Dazu sind heute Datenverarbeitungsvorrichtungen im Einsatz, die den Zufluss und den Abfluss von Teilen - oder Packungen von Teilen - erfassen, so dass der aktuelle Lagerbestand immer als Bilanz von Zu- und Abfluss ermittelt werden kann. Die Richtigkeit dieser Bilanz setzt voraus, dass der Materialfluss konsequent und zutreffend erfasst wird. Die Fehlermöglichkeiten sind jedoch zahlreich: Unrichtiges Erfassen hand- oder maschinenschriftlich erstellter Belege, Verlegen oder Vergessen von Belegen bei manuellem Einlagern oder Entnehmen von Teilen, oder unrichtiges Erstellen solcher Belege. Um solche Unstimmigkeiten zu bereinigen sind periodische Inventuren oder Bestandesaufnahmen notwendig. Zwischen solchen Inventuren - falls sie fehlerlos erfolgen - sind gewisse Unsicherheiten in Kauf zu nehmen.

Aus US 3,605,089 ist eine Logistik-Waage bekannt, bei der jeder Lagerstandort bzw. die Auflagefläche jedes eingesetzten Behälters mit einer Waage ausgerüstet ist. Zusätzlich sind dort die elektronischen Abfrage- und Datenverarbeitungsmittel offen gelegt, die für ein solches Logistikkonzept notwendig und vorgesehen sind. Diese Lösung ist zwar komfortabel, aber wegen der grossen Zahl einzusetzender Waagen auch aufwendig und kostspielig. Um die Kosten zu senken, werden druckabhängige Widerstände als Kraftsensoren vorgeschlagen, die nun den Nachteil von verhältnismässig schlechter Auflösung haben und auf Grund von Umwelteinflüssen, wie Feuchte und Temperatur, zu grosser Drift neigen.

US-4,419,734 offenbart ein Wägesystem nach dem Oberbegriff des Patentanspruches 1.

Die Aufgabe, die mit der vorliegenden Erfindung gelöst werden soll, ist es, ein Hilfsmittel zu schaffen, das Lager-Zu- und Abgänge lückenlos und richtig erfassen kann, und jederzeit einen fehlerfreien Istwert eines Lagers, vorzugsweise eines solchen von Kleinteilen, zu liefern im Stande ist. Die Lieferung der hierzu geeigneten Daten soll zudem in kurzen Zeitabständen und ohne aktives menschliches Zutun erfolgen, so dass Zu- und Abgänge und Lagerbestände praktisch permanent erfasst, dokumentiert und gespeichert werden können.

Die Lösung der gestellten Aufgabe ist wiedergegeben im kennzeichnenden Teil des Patentanspruches 1 hinsichtlich ihrer wesentlichen Elemente, in den weiteren Patentansprüchen hinsichtlich weiterer vorteilhafter Ausbildungen.

Anhand der zugehörigen Zeichnung wird der Erfindungsgedanke näher erläutert. Es zeigen

Fig. 1        den Aufbau der erfindungsgemässen Logistik-Waage in schematischer Art,

Fig. 2a      ein erstes Ausführungsbeispiel in einer Perspektive,

Fig. 2b      einen ersten Längsschnitt durch Fig. 2a,

Fig. 2c      einen zweiten Längsschnitt durch Fig. 2a,

Fig. 3        eine Frontansicht des ersten Ausführungsbeispiels,

Fig. 4a      ein zweites Ausführungsbeispiel in einer Perspektive,

Fig. 4b      einen Längsschnitt durch Fig. 4a,

Fig. 4c      einen Querschnitt durch Fig. 4a,

Fig. 5        eine Ansicht eines dritten Ausführungsbeispiels,

Fig. 6a      einen Querschnitt durch ein viertes Ausführungsbeispiel,

Fig. 6b      eine Draufsicht auf das Ausführungsbeispiel von Fig. 6a.

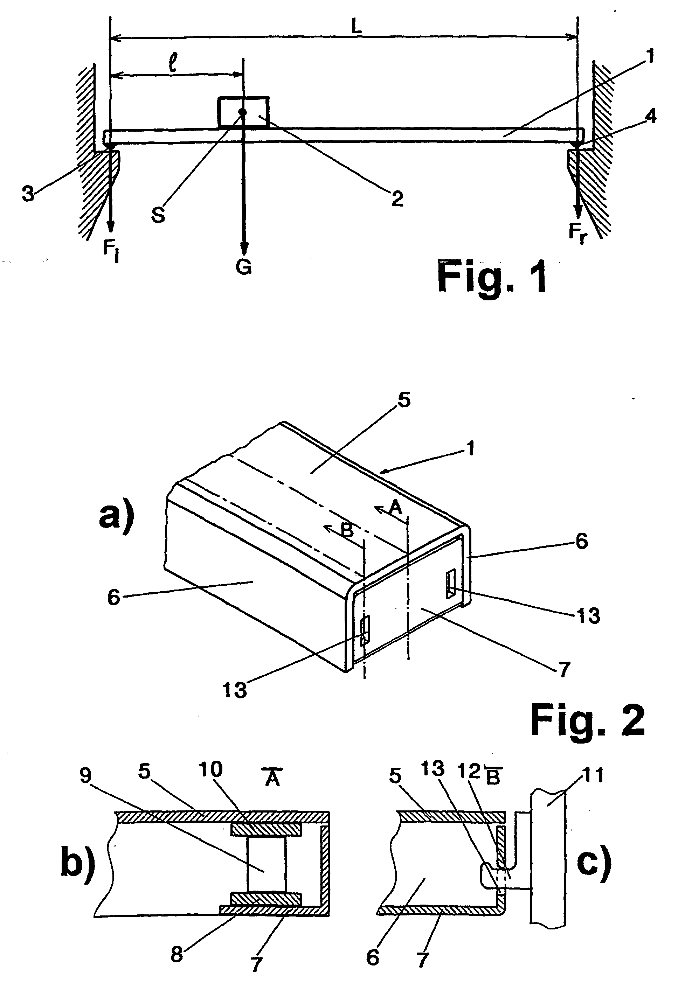

In der schematischen Darstellung von Fig. 1 liegt auf einem Regal 1 eines Kleinteillagers ein Behälter 2 mit Gewichtskraft $\underline{G}$ im Schwerpunkt $\underline{S}$. Das Regal hat eine Gesamtlänge $\underline{L}$ zwischen zwei schematisch als Schneiden dargestellten Auflagern 3, 4. Der Ort des Behälters 2 befindet sich im Abstande $\ell$ vom linken Auflager 3 entfernt. Betrachtet man zunächst das Auflager 3 als virtuellen Drehpunkt, so ergibt die Momentenrechnung für die Auflagekraft $F_r$ im rechten Auflager 4

$$F_r = G\,\frac{\ell}{L}. \tag{1}$$

Wendet man dieselbe Ueberlegung an für das rechte Auflager 4 als virtuellen Drehpunkt, ergibt sich die Auflagekraft $F_\ell$ im linken Auflager 3 zu

$$F_\ell = G\,\frac{L-\ell}{\ell} \tag{2}$$

Aus (1) und (2) kann sofort die Summe gebildet werden und ergibt, wie bekannt

$$F_r + F_\ell = G \tag{3}$$

Bildet man jedoch die Differenz (1) - (2), so ergibt sich

$$F_r - F_\ell = G\,\frac{2\ell-L}{L} \tag{4}$$

was zur Bestimmung von $\ell$ führt:

$$\ell = \frac{L}{2}\left(\frac{F_r - F_\ell}{F_r - F_\ell} + 1\right) = L\,\frac{F_r}{F_r + F_l}. \tag{5}$$

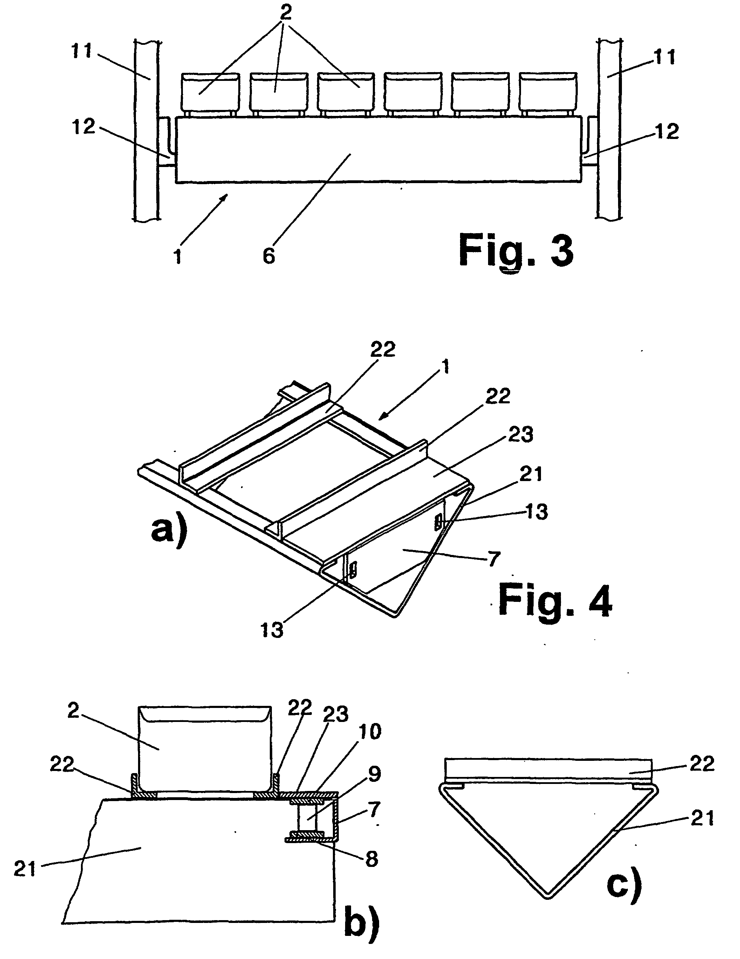

Zur Ermittlung der Auflagekräfte $F_\ell$ und $F_r$ sind erfindungsgemäss zwei Wägezellen vorgesehen - wie näher in den Fig. 2 und 4 gezeigt.

Werden nun aus dem Behälter 2 Teile entnommen, so kann über Gl. (3) sofort deren neues Gewicht bestimmt werden, damit also auch das entnommene oder zugefügte Gewicht, und Gl. (5) gestattet den Ort des Behälters zu ermitteln.

Alle Gleichungen (1) bis (5) sind selbstverständlich symmetrisch und können unter Austausch der Begriffe "links" und "rechts" sofort mit elementarer Algebra ineinander übergeführt werden.

Neutralisiert man diese Seitenbegriffe und setzt folgende Entsprechungen

$$\ell = \ell_1$$

$$L - \ell = \ell_2$$

$$F_\ell = F_1$$

$$F_r = F_2,$$

so resultieren folgende Uebersetzungen und Verallgemeinerungen der Gleichungen:

$$F_{1,2} = G\,\frac{\ell_{2,1}}{L} \tag{1,2}$$

$$F_1 + F_2 = G \tag{3}$$

$$F_{1,2} - F_{2,1} = \frac{G}{L}(L - 2\ell_{1,2}) \tag{4}$$

$$\ell_{1,2} = L \cdot \frac{F_{2,1}}{F_1 + F_2} \tag{5}$$

Da die Orte der Behälter 2, mit anderen Worten die Grössen $\ell_{1,2}$ nur diskrete Werte annehmen können, oder auf $\frac{\ell_{1,2}}{L}$ angewendet, nur in einer endlich abzählbaren Menge von echten Brüchen liegen können, kann über einen einfachen Algorithmus die Nummer des Lagerbehälters entweder aus den Werten $\frac{\ell_1}{L}$ oder $\frac{\ell_2}{L}$ gefunden werden. Zur Erhöhung der Sicherheit kann der Algorithmus redundant sowohl auf $\frac{\ell_1}{L}$ und $\frac{\ell_2}{L}$ angewendet werden.

Fig. 2 a, b, c ist die Darstellung eines ersten Ausführungsbeispiels des Erfindungsgedankens. Das Regal 1 ist hier ausgeführt als Blechkonstruktion in Form eines nach unten geöffneten U mit einem Regalboden 5 und zwei zur Versteifung dienenden Seitenwänden 6. Die mit 5, 6 bezeichneten Elemente bilden zusammen die in diesem Ausführungsbeispiel verwendete Tragstruktur. Von beiden Enden des Regals 1 (dargestellt ist nur die zur linken symmetrische rechte Seite) ragt je ein im Wesentlichen L-förmiges Stützteil 7 in das nach unten geöffnete U des Regals 1.

Fig. 2a zeigt eine Perspektive von schräg oben auf das rechte Endes des Regals 1.

Fig. 2b ist ein Längsschnitt AA durch das Regal 1. Auf dem horizontalen Schenkel des L-förmigen Stützteils 7 ist eine Gestellplatte 8 einer Kraftmesszelle 9 in schematischer Darstellung befestigt. Oben weist die Kraftmesszelle 9 eine Lastaufnehmerplatte 10 auf, auf welcher der Regalboden 5 befestigt ist, ebenfalls in schematischer Weise dargestellt.

In Fig. 2c, welche einen Schnitt BB darstellt, ist ersichtlich, wie das Regal 1 in zwei an einem Gestell 11 befestigten Haken 12 eingehängt wird, welche in zwei Oeffnungen 13 im vertikalen Schenkel des L-förmigen Stützteils 7 eingreifen.

Fig. 3 ist die Darstellung eines Regals 1 gemäss dem Ausführungsbeispiel von Fig. 2. Hier sind sechs Behälter 2 vorgesehen. Die Anzahl von Behältern 2 pro Regal 1 ist aus praktischen Gründen limitiert durch

- die kleinste Gewichtseinheit des Lagergutes pro Behälter,
- die durch das Lagergut mögliche maximale Abweichung des Schwerpunktes eines Behälters 2 von seinem geometrischen Zentrum, in seitlicher Richtung,
- die Auflösung der Wägezellen und der Reproduzierbarkeit der Wägeresultate über lange Zeiträume.

Dies unter der Voraussetzung, dass der Ort jedes Behälters 2 gut definiert werden kann, was allerdings mit einfachen Mitteln in aller Regel möglich ist. Diese maximal mögliche Anzahl von Behältern 2 pro Regal lässt sich durch einfache Variationsrechnungen aus den Gl. (4, 5) ermitteln.

Neben den bereits erwähnten Mitteln - wie z.B. der elektronischen Ermittlung der Kraft $F_{1,2}$ - ist ein Rechner vorgesehen und ein Auswahl- oder Abrufsystem der Wägeresultate, entweder durch direkte Adressierung der Kraftmesszellen oder der - virtuellen - Behälternummer oder durch sequentiellen Abruf über ein bekanntes Bus-System.

Die elektronische Datenverarbeitung kann dann in verschiedener, dem konkreten Anwendungsfall entsprechender Weise geschehen.

Als Kraftmesszellen kommen prinzipiell alle solchen in Frage, die die Anforderungen hinsichtlich Auflösung, Langzeitstabilität und Reproduzierbarkeit der Wägeresultate zu erfüllen vermögen, vorzugsweise, aber nicht ausschliesslich, solche nach dem Schwingsaitenprinzip arbeitende.

Fig. 4a, b, c ist die Darstellung eines zweiten Ausführungsbeispiels des Erfindungsgedankens. Das Regal 1 ist hier so aufgebaut, dass ein V-förmig gebogenes Blech eine Tragstruktur 21 bildet, auf welcher beispielsweise L-förmig gebogene Leitbleche 22 quer zur Oeffnung der V-förmigen Tragstruktur 21 beispielsweise angeschweisst sind. Diese stellen also Schienen dar und dienen einerseits zur Versteifung der Tragstruktur 21, anderseits zum genauen Positionieren der Behälter 2. An beiden Enden der Tragstruktur 21 sind, wie bereits zu Fig. 2a, b, c ausgeführt, Stützteile 7 vorgesehen, von denen jedes über eine Gestellplatte 8 eine Kraftmesszelle 9 trägt, welche ihrerseits über eine Lastaufnehmerplatte 10 ein beispielsweise streifenförmiges Tragelement 23 der Tragstruktur 21 tragen. Das Tragelement 23 ist an der Tragstruktur 21 ebenfalls beispielsweise angeschweisst.

Die Leitbleche 22 bilden mit dem eingefalzten Rand der Tragstruktur 21 zusammen das Element, welches in Fig. 2 mit "Boden" 5 bezeichnet ist, während hier ein eigentlicher Boden nicht vorgesehen, jedoch auch nicht ausgeschlossen ist. Die Funktion der Seitenwände 6 aus Fig. 2 wird durch die Tragstruktur 21 übernommen. Im Rahmen des Könnens eines Fachmannes sind mannigfaltige weitere Ausbildungen von Regalen 1 denk- und ausführbar. Erfindungswesentlich ist bei allen jedoch, dass das Gewicht der Tragstruktur im allgemeinen und der darauf befindlichen, unterschiedlich beladenen, Behälter 2 über zwei an den Enden des Regals 1 befindliche Kraftmesszellen 9 an das Gestell 11 oder ihm funktional entsprechende statische Tragelemente abgeführt wird.

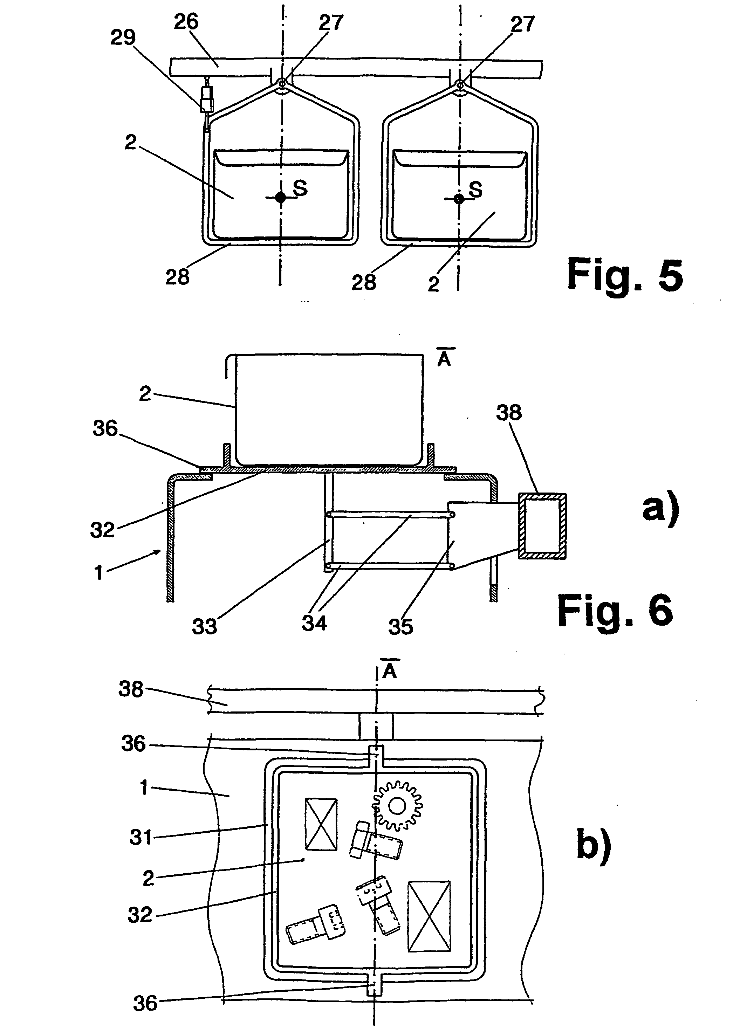

Ein drittes Ausführungsbeispiel ist Gegenstand von Fig. 5. Hier ist die funktional das Regal 1 bildende Tragstruktur als Träger 26 ausgebildet, welcher wiederum - ohne bildliche Darstellung - über zwei Kraftmesszellen 9 auf je einem Stützteil 7 beispielsweise mittels je zweier Haken 12 am Gestell 11 oder den ihm funktional entsprechenden statischen Elementen abgestützt ist. Der Träger 26 trägt in beispielsweise gleichen Abständen an Schwenklagern 27 Aufnahmekörbe 28 für die Behälter 2. Diese Ausführungsform der Erfindung hat den Vorteil, dass der Schwerpunkt $\underline{S}$ jedes Behälters 2 immer genau unter ein Schwenklager 27 zu liegen kommt. Da die Ortsbestimmung jedes Behälters damit genauer wird, kann bei gleichbleibender Genauigkeit, Reproduzierbarkeit und Auflösung der Kraftmesszellen 9 die Anzahl der Behälter 2 pro Regal 1 vergrössert werden.

Ein im Erfindungsgedanken eingeschlossener Zusatz ist ebenfalls in Fig. 5 enthalten. Ein schematisch dargestellter Dämpfer 29 verbindet den (in Fig. 5 links dargestellten) Aufnahmekorb 28 mit dem Träger 26. Dieser Dämpfer 29 hat die Aufgabe, die beim Be- und Entladen der Behälter praktisch unvermeidlich entstehenden Pendelbewegungen der Aufnahmekörbe 28 zu dämpfen, und zwar so, dass nach Abklingen der Pendelbewegung kein Restdrehmoment im Schwenklager 27 oder im Dämpfer 29 verbleibt. Solche Dämpfer 29 sind an sich, in verschiedenen Bauarten und nach verschiedenen Prinzipien wirken, bekannt. Der Träger 26 ist hier ebenfalls nur schematisch dargestellt, da aus dem Können des Fachmannes manche Lösungen möglich sind.

Fig. 6a, b zeigt ein viertes Ausführungsbeispiel des Erfindungsgedankens. Das Regal 1 weist hier eine Anzahl von Ausnehmungen 31 auf, welche Anzahl mit der maximal möglichen der Behälter 2 übereinstimmt. Jede Ausnehmung 31 nimmt mit genügend allseitigem Abstand eine Schale 32 auf, auf welcher der Behälter 2 zu stehen kommt. Die Schale 32 ist mit einem im Wesentliche vertikalen Stab 33 fest verbunden, welcher durch zwei Lenker 34 parallel geführt wird. Diese ihrerseits sind an einem weiteren im Wesentlichen vertikalen Stab 35 angelenkt, welcher an einem parallel zum Regal 1 verlaufenden und am Gestell 11 befestigten Stab 38 befestigt ist. Beispielsweise im Bereich der Ausnehmung 31 trägt die Schale 32 zwei miteinander fluchtende Anschläge 36, die sich auf das Regal 1 - oder allgemeiner: auf die Tragstruktur - abstützen.

Stimmt beim Behälter 2 der Schwerpunkt nicht mit dem geometrischen Zentrum überein - was wohl die Regel darstellt - so erzeugt dies ein Drehmoment, welches über den Stab 38 an das Gestell 11 abgeführt wird. Es verbleibt die netto wirkende Gewichtskraft des Behälters 2, der nun auf eine gut definierte Stelle, nämlich der Abstützung der Anschläge 36, wirkt.

Die weitere Ausführung der Enden des Regals ist wie zu Fig. 2 oder 4 beschrieben.

Da die aus den Elementen 33, 34, 35 bestehende Parallelführung nur virtuelle Bewegungen ausführt, kann sie aus einer beispielsweise gestanzten und gebogenen Blechkonstruktion bestehen. Die Gelenke der Parallelführung können dann Biegegelenke sein, wobei durch Justierung sichergestellt werden kann, dass die Anschläge 36 bei leerer Schale 32 gerade kraftlos oder auf Null tarierbar auf dem Regal aufliegen.

Alternativ zur Befestigung der Kraftmesszellen 9 am Regal 1, können diese selbstverständlich auch am Gestell 11 selbst befestigt sein und über die Lastaufnehmerplatte 10 die Haken 12 oder ihnen entsprechende Vorrichtungen tragen. Damit wird der Lasteinleitpunkt nicht verschoben, sondern bleibt in der Aufnahmestelle des Regals 1 in den Haken 12.

Ein erfindungsgemässer Zusatz zu den bisher beschriebenen Ausführungsbeispielen besteht aus einem vorzugsweise optischen Sperr- bzw. Freigabesignal, also aus je einer roten bzw. grünen Signallampe: Wird ein Lager beispielsweise von zwei Personen be- oder/und entladen, so ist es denkbar, dass zwei solcher Be- und/oder Entladevorgänge auf dem gleichen Regal 1 erfolgen und zwar so, dass beide genannten Vorgänge sich bezüglich der Messzeit überschneiden.

Jedes der in der erfindungsgemässen Logistikwaage einsetzbare System aus Kraftmesszelle 9 und zugehöriger Auswerte-Elektronik benötigt eine gewisse Zeit bis ein neuer Kraftwert stabil und innerhalb der vorgegebenen Auflösung ermittelt ist. In aller Regel weist die genannte Auswerte-Elektronik eine sog. Ruhekontrolle auf, die ein Freigabesignal erzeugt, wenn der neu ermittelte Kraftwert die genannten Kriterien erfüllt. Dieses genannte Freigabesignal kann durch an sich bekannte Mittel zur Steuerung eines sinnlich wahrnehmbaren, also akustischen oder vorzugsweise optischen, Signals verwendet werden.

Wo eine solche, vorzugsweise aus roten und grünen Signallampen bestehende, Anzeige angebracht wird, ist selbstverständlich, ohne den Erfindungsgedanken zu verlassen, reinen Zweckmässigkeitsüberlegungen überlassen, weshalb auch die Darstellung in den Figuren unterbleibt.

**Patentansprüche**

1.  Wägesystem für die Verwaltung eines Lagers von Teilen, vorzugsweise von Kleinteilen, bei welchem die Anzahl von Teilen über deren Gewicht ermittelt wird, elektronische Datenverarbeitungsmittel vorhanden sind sowohl für die Auswertung der Gewichte und deren Standorte, als auch die eigentliche Lagerverwaltung und das Lager eine beliebige aber bestimmte Anzahl von Regalen (1) aufweist, wobei

    -   jedes Regal (1) eingerichtet ist zur Aufnahme einer vorgegebenen Anzahl von Teilen oder von solchen enthaltende Behältern (2),
    -   jedes Regal (1) eine horizontale Tragstruktur (5, 6, 21, 26) aufweist, welche die Teile oder Behälter (2) trägt,
    -   jedes Regal (1) an jedem seiner Enden je ein Stützteil (7) aufweist, welches in von einem Gestell (11) mindestens mittelbar getragene Aufhängemittel (12) eingehängt werden kann,
    -   für jedes Regal (1) je zwei Kraftmesszellen (9) vorhanden sind,

    **dadurch gekennzeichnet, dass**
    die elektronischen Datenverarbeitungsmittel so ausgelegt sind, dass sie mittels der geeigneten algebraischen Kombination der Messresultate der zwei Kraftmesszellen (9) sowohl das Gewicht der Teile oder der Behälter (2), als auch deren Orte ermitteln.

2.  Wägesystem nach Patentanspruch 1, **dadurch gekennzeichnet, dass**

    -   jedes Stützteil (7) eine Kraftmesszelle (9) trägt, welche an ihm befestigt ist,
    -   die horizontale Tragstruktur (5, 6, 21, 26) sich an jedem ihrer Enden auf je eine der genannten Kraftmesszellen (9) abstützt und an ihr befestigt ist.

3.  Wägesystem nach Patentanspruch 1, **dadurch gekennzeichnet, dass**

    -   je eine der zwei Kraftmesszellen (9) auf je einer Seite des Gestells (11) befestigt ist und sich auf dieses abstützt und die Aufhängemittel (12) trägt,
    -   die horizontale Tragstruktur (5, 6, 21, 26) sich an jedem ihrer Enden auf eines der genannten Stützteile (7) abstützt und an ihm befestigt ist, wobei die Stützteile (7) die zu messende Gewichtskraft auf die Aufhängemittel (12) übertragen.

4.  Wägesystem nach Patentanspruch 2 oder 3, **dadurch gekennzeichnet, dass** jede Wägezelle (9) einzeln an die Datenverarbeitungsmittel angeschlossen ist.

5.  Wägesystem nach Patentanspruch 2 oder 3, **dadurch gekennzeichnet, dass** ein Bus-System vorhanden ist, welches die einzelnen Wägezellen 9 nacheinander abfragt.

6.  Wägesystem nach Patentanspruch 4 oder 5, **dadurch gekennzeichnet, dass** die horizontale Tragstruktur aus einem horizontalen Boden (5) besteht, welcher nach unten weisende Seitenwände (6) aufweist, und die Teile oder die Behälter auf diesen Boden (5) aufgelegt werden.

7.  Wägesystem nach Patentanspruch 6, **dadurch gekennzeichnet, dass** der Boden mit quer zu seiner Längserstreckung verlaufenden Schienen (22) versehen ist.

8.  Wägesystem nach Patentanspruch 4 oder 5, **dadurch gekennzeichnet, dass**

    -   die horizontale Tragstruktur (21) aus einem V-förmigen nach oben offenen Blech besteht mit eingefalzten Rändern,
    -   quer zur Längserstreckung der Tragstruktur (21) Schienen (22) an den eingefalzten Rändern befestigt sind zur Aufnahme von Behältern (2).

9.  Wägesystem nach Patentanspruch 4 oder 5, **dadurch gekennzeichnet, dass**

    -   auf der Tragstruktur (5, 6, 21, 26) eine der Anzahl aufzunehmender Behälter (2) entsprechende Anzahl von Schalen (32) angeordnet ist,
    -   jede Schale (32) auf einem vertikalen Stab (33) befestigt ist,

- ein parallel zur Tragstruktur (5, 6, 21, 26) verlaufender und am Gestell (11) befestigter im wesentlich horizontaler Stab (38) vorhanden ist,
- je ein weiterer vertikaler Stab (35) vorhanden und am horizontalen Stab (38) befestigt ist,
- je zwei zueinander im Wesentlichen parallele Lenker (34) vorhanden und sowohl am ersten als auch am zweiten vertikalen Stab (33, 35) angelenkt sind, so dass jede Schale (32) mit dem ersten vertikalen Stab (33) durch die Lenker (34) parallel geführt wird,
- mindestens ein Anschlag (36) vorhanden und mit dem ersten vertikalen Stab (33) mindestens mittelbar verbunden ist, welcher sich auf die Tragstruktur abstützt.

10. Wägesystem nach Patentanspruch 9, **dadurch gekennzeichnet, dass** die Parallelführung aus erstem und zweitem Stab (32, 35) und Lenkern (34) eine Blechkonstruktion mit Biegegelenken ist, welche so eingerichtet sind, dass der mindestens eine Anschlag (36) sich bei leerer Schale (33) kraftlos oder auf Null tarierbar auf die Tragstruktur abstützt.

11. Wägesystem nach Patentanspruch 4 oder 5, **dadurch gekennzeichnet, dass** die horizontale Tragstruktur an Schwenklagern (27), deren horizontale Achsen quer zur Erstreckung der Tragstruktur verlaufen, je einen im Schwenklager (27) schwenkbaren Aufnahmekorb (28) trägt zur Aufnahme von Teilen oder Behältern (2).

12. Wägesystem nach Patentanspruch 11, **dadurch gekennzeichnet, dass** für jeden Aufnahmekorb (28) ein Dämpfer (29) vorhanden ist zum Dämpfen von dessen Pendelbewegungen, welcher so beschaffen ist, dass nach dem Ausklingen der genannten Pendelbewegung kein Restdrehmoment sowohl im Schwenklager (27) als auch im Dämpfer (29) verbleibt.

13. Wägesystem nach einem der Patentansprüche 1 - 12, **dadurch gekennzeichnet, dass** die Kraftmesszellen (9) solche sind, welche nach dem Schwingsaitenprinzip arbeiten.

14. Wägesystem nach einem der Patentansprüche 1 - 13, **dadurch gekennzeichnet, dass**

- für jedes Regal eine Anzeigevorrichtung vorhanden ist, welche anzeigt, ob ein Gewichtsermittlungs-Vorgang abgeschlossen ist oder andauert,
- durch die elektronischen Datenverarbeitungsmittel aus der Ruhekontrolle jedes für ein Regal (1) eingesetzten Paares von Kraftmesszellen (9) ein Freigabesignal erzeugt wird, wenn ein Gewichtsermittlungsvorgang abgeschlossen ist,
- das genannte Freigabe Signal die Anzeigevorrichtung so steuern kann, dass je ein sinnlich wahrnehmbares Signal für Freigabe oder Nichtfreigabe erfolgt.

15. Wägesystem nach Patentanspruch 14, **dadurch gekennzeichnet, dass** das Freigabesignal aus einer grünen, das Nichtfreigabesignal aus einer roten Signallampe besteht.

## Claims

1. A weighing system for managing a stock of parts, preferably small parts, in which the number of parts is determined via their weight, there are electronic data processing means both for the evaluation of the weights and their locations and also the actual stock management, and the store has an arbitrary but determined number of racks (1), whereby

- each rack (1) is set up to accommodate a predefined number of parts or of containers (2) containing such parts,
- each rack (1) has a horizontal loadbearing structure (5, 6, 21, 26), which bears the parts or containers (2),
- each rack (1) has at each of its ends a supporting part (7), which can be hooked into suspension means (12) borne at least indirectly by a frame (11),
- for each rack (1) there are two force measuring cells (9).

   **characterized in that**
the electronic data processing means are struc-tured such that they determine, by means of the suitable algebraic combination of the measuring results of the two force measuring cells (9) of each rack, as well the weight of the parts or the containers (2), as also their positions on the rack.

2. The weighing system as claimed in patent claim 1, **characterized in that**

- each supporting part (7) bears a force measuring cell (9), which is fixed to it,
- the horizontal loadbearing structure (5, 6, 21, 26) is supported at each of its ends on one of said force measuring cells (9) in each case and is fixed to it.

3. The weighing system as claimed in patent claim 1, **characterized in that**

- each one of the two force measuring cells (9) is fixed to one side of the frame (11) in each case and is supported on the latter and bears the suspension means (12),
- the horizontal loadbearing structure (5, 6, 21, 26) is supported at each of its ends on one of said supporting parts (7) and is fixed to it, the supporting parts (7) transmitting the weight to be measured to the suspension means (12).

4. The weighing system as claimed in patent claim 2 or 3, **characterized in that** each weighing cell (9) is connected individually to the data processing means.

5. The weighing system as claimed in patent claim 2 or 3, **characterized in that** there is a bus system which interrogates the individual weighing cells (9) one after another.

6. The weighing system as claimed in patent claim 4 or 5, **characterized in that** the horizontal loadbearing structure comprises a horizontal shelf (5), which has side walls (6) that point downward, and the parts or the containers are placed on this shelf (5).

7. The weighing system as claimed in patent claim 6, **characterized in that** the shelf is provided with rails (22) running transversely with respect to its longitudinal extent.

8. The weighing system as claimed in patent claim 4 or 5, **characterized in that**

- the horizontal loadbearing structure (21) consists of a V-shaped metal sheet open at the top and having folded-in edges,
- rails (22) are fixed to the folded-in edges, transversely with respect to the longitudinal extent of the loadbearing structure (21), in order to accommodate containers (2).

9. The weighing system as claimed in patent claim 4 or 5, **characterized in that**

- on the loadbearing structure (5, 6, 21, 26), a number of trays (32) corresponding to the number of containers (2) to be accommodated is arranged,
- each tray (32) is fixed to a vertical rod (33),
- there is a rod (38) which runs parallel to the loadbearing structure (5, 6, 21, 26) and is fixed to the frame (11) and is substantially horizontal,
- there is in each case a further vertical rod (35) which is fixed to the horizontal rod (38),
- there are in each case two mutually substantially parallel links (34) which are attached both to the first and to the second vertical rod (33, 35), so that each tray (32) is guided parallel to the first vertical rod (33) by the links (34),
- there is at least one stop (36) which is at least indirectly connected to the first vertical rod (33) and which is supported on the loadbearing structure.

10. The weighing system as claimed in patent claim 9, **characterized in that** the parallel guide comprising the first and second rod (32, 35) and links (34) is a sheet metal construction with bending hinges, which are set up in such a way that the at least one stop (36) is supported on the loadbearing structure without force, or can be tared to zero, when the tray (33) is empty.

11. The weighing system as claimed in patent claim 4 or 5, **characterized in that** on pivot bearings (27) whose horizontal axes run transversely with respect to the extent of the loadbearing structure, the horizontal loadbearing structure in each case bears a holding basket (28) which can be pivoted in the pivot bearing (27) in order to accommodate parts or containers (2).

12. The weighing system as claimed in patent claim 11, **characterized in that** for each holding basket (28) there is a damper (29) in order to damp its swinging movements, said damper being such that after said swinging movement has decayed, no residual torque remains either in the pivot bearing (27) or in the damper (29).

**13.** The weighing system as claimed in one of patent claims 1-12, **characterized in that** the force measuring cells (9) are those which operate on the vibrating string principle.

**14.** The weighing system as claimed in one of patent claims 1-13, **characterized in that**

- for each rack there is an indicating device which indicates whether a weight determination process has been completed or is continuing,
- by means of the electronic data processing means, an enable signal is generated from the rest monitor of each pair of force measuring cells (9) used for one rack (1), when a weight determination process has been completed,
- said enable signal is able to control the indicating device in such a way that there follows a signal for enable or non-enable which can be perceived by the senses.

**15.** The weighing system as claimed in patent claim 14, **characterized in that** the enable signal comprises a green signal lamp, and the non-enable signal comprises a red signal lamp.

**Revendications**

**1.** Système de pesée pour la gestion d'un entrepôt de pièces, de préférence de petites pièces, dans lequel le nombre de pièces est déterminé par leurs poids, des moyens de traitement de données électroniques sont présents aussi bien pour l'évaluation des poids et de leurs sites que pour la gestion propre de l'entrepôt et l'entrepôt présente un nombre quelconque mais déterminé d'étagères (1),

- chaque étagère (1) étant installée en vue de la réception d'un nombre prédéfini de pièces ou de récipients (2) contenant celles-ci,

- chaque étagère (1) présentant une structure portante horizontale (5, 6, 21, 26) qui porte les pièces ou récipients (2),

- chaque étagère présentant à chacune de ses extrémités à chaque fois une pièce de support (7) qui peut être suspendue dans des moyens de suspension (12) portés au moins au centre par un châssis (11),

- pour chaque étagère (1), deux cellules de mesure de force (9) étant à chaque fois présentes,

**caractérisé en ce que**
les moyens de traitement de données électroniques sont conçus de sorte qu'ils déterminent au moyen de la combinaison algébrique appropriée des résultats de mesure des deux cellules de mesure de force (9) aussi bien le poids des pièces ou des récipients (2) que leurs emplacements.

**2.** Système de pesée selon la revendication 1, **caractérisé en ce que**

- chaque pièce de support (7) porte une cellule de mesure de force (9) qui est fixée sur elle,

- la structure portante horizontale (5, 6, 21, 26) s'appuie sur chacune de ses extrémités sur une des cellules de mesure de force (9) mentionnées à chaque fois et est fixée sur elle.

**3.** Système de pesée selon la revendication 1, **caractérisé en ce que**

- à chaque fois une des deux cellules de mesure de force (9) est fixée sur un côté à chaque fois du châssis (11) et s'appuie sur celui-ci et porte les moyens de suspension (12),

- la structure portante horizontale (5, 6, 21, 26) s'appuie sur chacune de ses extrémités sur une des pièces de support mentionnées (7) et est fixée sur elle, les pièces de support (7) transmettant le poids à mesurer aux moyens de suspension (12).

**4.** Système de pesée selon la revendication 2 ou 3, **caractérisé en ce que** chaque cellule de pesée (9) est raccordée individuellement aux moyens de traitement de données.

**5.** Système de pesée selon la revendication 2 ou 3, **caractérisé en ce qu'**un système de bus est présent, lequel consulte les cellules de pesée 9 individuelles l'une après l'autre.

**6.** Système de pesée selon la revendication 4 ou 5, **caractérisé en ce que** la structure portante horizontale se compose d'un fond horizontal (5) qui présente des parois latérales (6) tournées vers le bas et les pièces ou les récipients sont posés sur ce fond (5).

**7.** Système de pesée selon la revendication 6, **caractérisé en ce que** le fond est pourvu de rails (22) s'étendant transversalement à son extension longitudinale.

**8.** Système de pesée selon la revendication 4 ou 5, **caractérisé en ce que**

- la structure portante horizontale (21) se compose d'une tôle ouverte vers le haut en forme de V avec des bords pliés,

- des rails (22) sont fixés transversalement à l'extension longitudinale de la structure portante (21) aux bords pliés en vue de la réception de récipients (2).

**9.** Système de pesée selon la revendication 4 ou 5, **caractérisé en ce que**

- un nombre de coques (32) correspondant au nombre de récipients à recevoir (2) est disposé sur la structure portante (5, 6, 21, 26),

- chaque coque (32) est fixée à une barre verticale (33),

- une barre essentiellement horizontale (38) s'étendant parallèlement à la structure portante (5, 6, 21, 26) et fixée sur le châssis (11) est présente,

- une autre barre verticale (35) est à chaque fois présente et est fixée sur la barre horizontale (38),

- deux bras oscillants (34) essentiellement parallèles l'un à l'autre sont à chaque fois présents et sont articulés aussi bien à la première qu'à la deuxième barre verticale (33, 35) de sorte que chaque coque (32) soit guidée parallèlement avec la première barre verticale (33) par les bras oscillants (34),

- au moins une butée (36) est présente et est reliée au moins au centre à la première barre verticale (33) qui s'appuie sur la structure portante.

**10.** Système de pesée selon la revendication 9, **caractérisé en ce que** le guidage parallèle de la première et deuxième barre (32, 35) et des bras oscillants (34) est une construction en tôle avec des articulations coudées (36) qui est installée de sorte que l'au moins une butée (36) s'appuie sans force en cas de coque vide (33) ou s'appuie sur la structure portante pouvant être tarée à zéro.

**11.** Système de pesée selon la revendication 4 ou 5, **caractérisé en ce que** la structure portante horizontale porte sur des paliers pivotants (27) dont les axes horizontaux s'étendent transversalement à l'extension de la structure portante à chaque fois une corbeille de réception (28) pouvant pivoter dans le palier pivotant (27) en vue de la réception de pièces ou récipients (2).

**12.** Système de pesée selon la revendication 11, **caractérisé en ce qu'**un amortisseur (29) qui est pourvu de sorte qu'aucun couple de rotation résiduel ne demeure dans le palier pivotant (27) ainsi que dans l'amortisseur (29) après le contrôle du mouvement oscillant mentionné est présent pour chaque corbeille de réception (28) en vue de l'amortissement de ses mouvements oscillants.

**13.** Système de pesée selon l'une quelconque des revendications 1 à 12, **caractérisé en ce que** les cellules de mesure de force (9) sont telles qu'elles fonctionnent selon le principe des cordes oscillantes.

**14.** Système de pesée selon l'une quelconque des revendications 1 à 13, **caractérisé en ce que**

- un dispositif d'affichage est présent pour chaque étagère, lequel affiche si un processus de détermination de poids est terminé ou continue,

- un signal de libération est généré par les moyens de traitement de données électroniques à partir du témoin de veille de chaque paire de cellules de mesure de force (9) utilisée pour une étagère (1) lorsqu'un processus de détermination de poids est terminé,

- le signal de libération mentionné peut commander le dispositif d'affichage de sorte qu'à chaque fois, un signal perceptible par les sens pour la libération ou la non-libération se produise.

**15.** Système de pesée selon la revendication 14, **caractérisé en ce que** le signal de libération se compose d'une lampe témoin verte et le signal de non-libération se compose d'une lampe témoin rouge.

Fig. 1

a)

Fig. 2

b)

c)

Fig. 3

a)

Fig. 4

b)

c)

Fig. 5

Fig. 6

a)

b)